# EUROPÄISCHE PATENTANMELDUNG

(11) **EP 4 450 367 A1**
(43) Veröffentlichungstag der Anmeldung: **23.10.2024**
(21) Anmeldenummer: 24152526.0
(22) Anmeldetag: 18.01.2024
(51) Int. Cl.: B62B 3/00, B62B 5/04

(54) **BESTÜCKUNGSWAGEN UND FAHRZEUGGESTELL**

(30) Priorität: 20.04.2023 DE 102023110085
(71) Anmelder: BeeWaTec AG, 72793 Pfullingen (DE)
(72) Erfinder: WALTER, Joachim, 72820 Sonnenbühl (DE)
(74) Vertreter: Kohler Schmid Möbus Patentanwälte

(57) **Zusammenfassung**

Die Erfindung betrifft einen Bestückungswagen (12) zum Bestücken eines Fahrzeugs mit Waren, mit einem Grundgestell (12) und einem relativ zum Grundgestell (12) in der Höhe verstellbaren Warenaufnahmegestell (18), wobei das Warenaufnahmegestell (18) mehrere Ladebodenaufnahmen (20, 22, 24) aufweist.

## Beschreibung

Die Erfindung betrifft einen Bestückungswagen zum Bestücken eines Fahrzeugs mit Waren. Weiterhin betrifft die Erfindung ein mit dem Bestückungswagen zusammenwirkendes in einem Fahrzeug montierbares Fahrzeuggestell.

Lieferdienste erfreuen sich immer größerer Beliebtheit. Beispielsweise können Kunden in einem Lebensmittelgeschäft unterschiedliche Lebensmittel online oder telefonisch bestellen. Die bestellten Lebensmittel werden dann in Behältnisse, beispielsweise Tüten, verpackt. Diese Tüten müssen dann mit einem Fahrzeug ausgefahren werden. Das Beladen des Fahrzeugs kann beispielsweise manuell erfolgen. Dieser Vorgang ist jedoch sehr zeitintensiv.

Wünschenswert ist es, die verpackten Waren außerhalb von dem Fahrzeug vorsortieren zu können und dann eine Möglichkeit zu schaffen, die Waren bzw. verpackten Waren schnell und effektiv in ein Fahrzeug zu laden, um die Standzeiten des Fahrzeugs so gering wie möglich zu halten.

Aufgabe der vorliegenden Erfindung ist es daher, ein System bereitzustellen, mit dem Fahrzeuge einfach und schnell mit Waren oder verpackten Waren beladen werden können.

Gelöst wird diese Aufgabe gemäß einem ersten Aspekt der Erfindung durch einen Bestückungswagen zum Bestücken eines Fahrzeugs mit Waren, mit einem Grundgestell und einem relativ zum Grundgestell in der Höhe, insbesondere stufenlos, verstellbaren Warenaufnahmegestell, wobei das Warenaufnahmegestell mehrere Ladebodenaufnahmen aufweist.

In den Ladebodenaufnahmen können Ladeböden aufgenommen werden, auf denen Waren oder verpackte Waren abgestellt sind. Die Waren können beispielsweise in Tüten verpackt sein. Alternativ ist es denkbar beispielsweise Getränkekisten auf einem Ladeboden abzustellen. Aus dem Warenaufnahmegestell heraus können die Ladeböden mitsamt den darauf abgestellten Waren in ein Fahrzeug transferiert werden. Es ist nicht mehr notwendig, einzelne Tüten oder Waren anzufassen und in das Fahrzeug zu laden. Dadurch, dass das Warenaufnahmegestell bezüglich des Grundgestells höhenverstellbar ist, kann die Ladenbodenaufnahme korrekt zur Höhe des Fahrzeugs, insbesondere zu einer fahrzeugseitigen Ladebodenaufnahme positioniert werden. Somit ist es insbesondere auch möglich, bei sich aufgrund des Warengewichts absenkendem Fahrzeug den Bestückungswagen bzw. das Warenaufnahmegestell nachzujustieren.

Das Warenaufnahmegestell kann beispielsweise vertikal ausgerichtete Schienen, Rohre oder Profile aufweisen, die in einer entsprechenden Führung an dem Grundgestell geführt sind, sodass das Warenaufnahmegestell bezüglich des Grundgestells in der Höhe einfach, insbesondere stufenlos, verstellt werden kann.

Besonders bevorzugt ist es, wenn das Warenaufnahmegestell hydraulisch, elektrisch oder pneumatisch relativ zum Grundgestell verstellbar ist. Beispielsweise kann ein Hydraulikzylinder zwischen dem Grundgestell und dem Warenaufnahmegestell angeordnet sein. Der Hydraulikzylinder kann beispielsweise fußbetätigbar sein. Somit kann ein Benutzer einfach die Höhe des Warenaufnahmegestells bezüglich des Grundgestells einstellen. Dabei kann das Warenaufnahmegestell, unabhängig von der Verstellmöglichkeit, in einer bestimmten Relativposition zum Grundgestell arretierbar sein.

Besonders vorteilhaft ist es, wenn der Bestückungswagen fahrbar ist. Dadurch kann der Bestückungswagen unabhängig, insbesondere entfernt vom Fahrzeug, mit Waren bestückt werden und anschließend zum zu beladenden Fahrzeug transferiert werden. Dadurch kann der Bestückungswagen durch einen Benutzer geschoben werden. Alternativ ist es denkbar, dass der Bestückungswagen motorisch angetrieben ist. Beispielsweise kann der Bestückungswagen ferngesteuert werden und somit zum richtigen Fahrzeug gefahren werden. Die Fernsteuerung kann durch einen Benutzer bedient werden. Alternativ ist es denkbar, dass der Bestückungswagen autonom fährt. Der Bestückungswagen kann entsprechende Räder oder Rollen aufweisen, um fahren zu können. Um den Bestückungswagen in einer Position zu parken, kann vorgesehen sein, dass jeder Rolle oder jedem Rad oder zumindest einigen Rollen oder Rädern Bremsen zugeordnet sind.

Alternativ oder zusätzlich kann eine Feststellbremse vorgesehen sein, insbesondere eine mit dem Boden zusammenwirkende Feststellbremse. Die Feststellbremse kann beispielsweise durch einen Benutzer mit dem Fuß aktiviert werden. Vorzugsweise ist die so betätigbare Feststellbremse in der Nähe eines mit dem Fuß betätigbaren Betätigungselements für die Höhenverstellung des Warenaufnahmegestells angeordnet.

Um den Bestückungswagen bezüglich eines zu beladenden Fahrzeugs auszurichten, kann eine Ausrichthilfe vorgesehen sein. Die Ausrichthilfe ist vorzugsweise im oberen Bereich des Warenaufnahmegestells angeordnet, sodass durch die Ausrichthilfe das Beladen des Fahrzeugs nicht beeinträchtigt wird. Die Ausrichthilfe kann zwei beabstandete Stäbe oder Rohre aufweisen, die mit einer entsprechenden Ausrichthilfe am Fahrzeug, insbesondere an einem Fahrzeuggestell, zusammenwirken.

Besonders bevorzugt ist es, wenn zumindest eine Ladenbodenaufnahme, vorzugsweise alle Ladebodenaufnahmen, jeweils zwei Ladebodenaufnahmeschienen aufweisen. Dabei können die Ladebodenaufnahmeschienen gegenüberliegend am Warenaufnahmegestell angeordnet sein. Ein Ladeboden kann auf die Ladebodenaufnahmeschienen auf- oder eingeschoben werden. Zur Reibungsminimierung können an den Ladeaufnahmeschienen oder am Ladeboden Rollen vorgesehen sein.

Zumindest eine Ladebodenaufnahme kann eine Ladebodenverriegelung aufweisen. Somit kann ein Ladeboden am Bestückungswagen verriegelt werden und kann verhindert werden, dass sich der Ladeboden versehentlich aus dem Bestückungswagen löst. Die Ladebodenverriegelung kann beispielsweise als schwenkbarer Hebel ausgebildet sein, der in eine entsprechende Ausnehmung am Ladeboden eingreift. Mehrere Ladebodenverriegelungen können mit einem Entriegelungsmechanismus gekoppelt sein, sodass ein Benutzer die Ladebodenverriegelungen für mehrere, insbesondere alle Ladebodenaufnahmen, gleichzeitig entriegeln kann.

Besonders vorteilhaft ist es, wenn zumindest eine Ladebodenaufnahme eine Ladebodenkippsicherung aufweist. Dadurch kann verhindert werden, dass ein Ladeboden beim Transfer vom Bestückungswagen in das Fahrzeug versehentlich kippt. Die Ladebodenkippsicherung kann beispielsweise eine oder mehrere Rollen aufweisen, die den Ladeboden von oben beaufschlagen. Alternativ kann eine Ladenbodenaufnahmeschiene im Querschnitt C-förmig ausgebildet sein und mit ihrem oberen Schenkel den Ladeboden übergreifen.

Zumindest eine Ladenbodenaufnahme kann eine Ladebodensicherung aufweisen. Insbesondere kann die Ladebodensicherung zusätzlich zur Ladebodenverriegelung vorgesehen sein. In Längsrichtung einer Ladebodenschiene können mehrere, insbesondere zwei, Ladebodensicherungen vorgesehen sein, sodass der Ladeboden in unterschiedlichen Einschiebepositionen gesichert werden kann, sodass der Ladeboden in einer Relativposition zur Ladebodenaufnahme festgelegt ist.

Es kann zumindest ein Ladeboden vorgesehen sein, der in eine Ladebodenaufnahme einschiebbar ist, wobei der Ladeboden eine mit der Ladebodensicherung zusammenwirkende, insbesondere manuell betätigbare, Ladebodenarretierung aufweist. Die Ladebodenarretierung kann Stifte aufweisen, die in die Ladebodensicherung eingreifen. Die Ladebodensicherung kann zu diesem Zweck Schrägen aufweisen, entlang denen die Stifte gleiten können oder durch die sie in entsprechende Stiftaufnahmen der Ladebodensicherung geführt werden. Durch manuelles Zurückziehen der Stifte kann der Ladeboden wieder freigegeben und relativ zur Ladebodenaufnahme bewegt werden. Die Stifte können federbeaufschlagt sein, sodass sie automatisch in entsprechende Stiftaufnahmen der Ladebodensicherung gelangen. Es kann durch einen Benutzer betätigbarer Seilzug vorgesehen sein, über den die Stifte gegen die Rückstellkraft der Feder aus der Ladebodensicherung gelöst werden können.

In den Rahmen der Erfindung fällt außerdem ein Fahrzeuggestell zur Montage in einem Fahrzeug, mit mehreren Ladebodenaufnahmen und einer Ausrichthilfe zur Ausrichtung eines Bestückungswagens. Die Ausrichthilfe des Fahrzeuggestells ist vorzugsweise komplementär zur Ausrichthilfe des Bestückungswagens ausgebildet. Die Ausrichthilfe des Fahrzeuggestells kann vorzugsweise im oberen Bereich des Fahrzeuggestells angeordnet sein.

Das Fahrzeuggestell kann zumindest ein Aufsetzelement aufweisen, auf das ein Element des Bestückungswagens, insbesondere des Warenaufnahmegestells, aufsetzbar ist. Insbesondere kann eine Ladebodenaufnahme eines Bestückungswagens auf das Aufsetzelement aufsetzbar sein. Das Aufsetzelement kann an einer Ladebodenschiene des Fahrzeuggestells angeordnet sein. Durch die Ausrichthilfe kann der Bestückungswagen insbesondere seitlich zum Fahrzeuggestell ausgerichtet werden. Durch diese Ausrichtung ist jedoch noch nicht sichergestellt, dass sich die Ladebodenaufnahmen des Bestückungswagens und die Ladebodenaufnahmen des Fahrzeuggestells in der gleichen Höhe befinden, sodass ein Ladeboden hindernisfrei vom Bestückungswagen zum Fahrzeuggestell oder umgekehrt transferiert werden kann. Um somit die Ladebodenaufnahmen des Fahrzeuggestells und des Bestückungswagens in der Höhe zueinander auszurichten, kann vorgesehen sein, dass nach einer Ausrichtung des Bestückungswagens über die Ausrichthilfen das Warenaufnahmegestell abgesenkt wird, sodass eine oder mehrere Ladenbodenaufnahmen des Warenaufnahmegestells auf ein Aufsetzelement aufgesetzt werden. Das Aufsetzelement kann beispielsweise im Querschnitt L-förmig ausgebildet sein. Das Aufsetzelement kann an einer Außenseite einer Ladebodenschiene angeordnet sein. Das Aufsetzelement kann Bestandteil einer Ladebodenschiene sein. Das Aufsetzelement kann so angeordnet und/oder ausgebildet sein, dass bei aufgesetzter Ladebodenschiene des Bestückungswagens diese bündig mit der Ladebodenschiene des Fahrzeuggestells angeordnet ist und ein stufenfreier Übergang von einer Ladenbodenschiene zur anderen Ladebodenschiene vorhanden ist.

Zumindest eine Ladebodenaufnahme des Fahrzeuggestells kann eine Ladebodenverriegelung aufweisen. Dadurch können Ladeböden im Fahrzeug sicher arretiert werden.

Zumindest eine Ladebodenaufnahme des Fahrzeuggestells kann eine Ladebodenkippsicherung aufweisen. Dies ist insbesondere vorteilhaft, damit die Ladeböden, wenn sie nur noch im hinteren Bereich beladen sind, ein Stück weit aus dem Fahrzeuggestell herausgezogen werden können, sodass die im hinteren Bereich des Ladebodens angeordneten Waren oder Warenverpackungen gegriffen werden können, ohne dass der Ladeboden abkippt.

Zumindest eine Ladenbodenaufnahme kann eine Ladenbodensicherung aufweisen. Somit kann der Ladenboden beispielsweise zur Hälfte aus dem Fahrzeuggestell herausgezogen und dort über die Ladebodensicherung relativ zum Fahrzeuggestell festgelegt werden. Ein Benutzer hat dann beide Hände frei, um Waren zu greifen. Die Ladebodensicherungen des Fahrzeuggestells sind vorzugsweise identisch zu den Ladebodensicherungen des Bestückungswagens ausgebildet.

In den Rahmen der Erfindung fällt außerdem ein Bestückungssystem mit einem erfindungsgemäßen Bestückungswagen und einem erfindungsgemäßen Fahrzeuggestell.

Weitere Merkmale und Vorteile der Erfindung ergeben sich aus der nachfolgenden detaillierten Beschreibung von Ausführungsbeispielen der Erfindung anhand der Figuren der Zeichnung, die erfindungswesentlich Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können.

Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung in verschiedenen Stadien der Benutzung dargestellt und in der nachfolgenden Beschreibung näher erläutert.

Es zeigen:
- Fig. 1a: ein Bestückungssystem mit einem Bestückungswagen und einem Fahrzeuggestell;
- Fig. 1b: eine Detaildarstellung einer Höhenverstellung;
- Fig. 1c: eine Detaildarstellung einer Einstelleinrichtung;
- Fig. 2a: eine perspektivische Darstellung des Bestückungswagens;
- Fig. 2b: eine Detaildarstellung einer Feststellbremse;
- Fig. 2c: eine Detaildarstellung einer Ausrichthilfe;
- Fig. 2d: eine Detaildarstellung einer Ladebodenverriegelung;
- Fig. 2e: eine Detaildarstellung eines Ausschnitts eines Ladebodens;
- Fig. 3a: eine perspektivische Darstellung eines Fahrzeuggestells;
- Fig. 3b: eine Detaildarstellung einer Ladebodensicherung;
- Fig. 3c: einen Endbereich einer Ladebodenaufnahme;
- Fig. 3d: eine Detaildarstellung einer Ausrichthilfe;
- Fig. 3e: einen Entriegelungsmechanismus zur Entriegelung einer Ladebodenverriegelung;
- Fig. 4a: die Unterseite eines Ladebodens;
- Fig. 4b: eine Detaildarstellung einer Ladebodenarretierung;
- Fig. 5a: einen Ladeboden mit zwei Ladebodenabschnitten;
- Fig. 5b: eine Detaildarstellung der Fig. 5a;
- Fig. 6: eine Seitenansicht des Bestückungssystems während einer Positionierung des Bestückungswagens relativ zum Fahrzeuggestell;
- Fig. 7: eine vergrößerte Darstellung eines Aufsetzelements;
- Fig. 8: eine Seitenansicht des Bestückungssystems bei korrekt zueinander positioniertem Bestückungswagen und Fahrzeuggestell;
- Fig. 9: eine Detaildarstellung der zueinander positionierten Ladebodenaufnahmen von Bestückungswagen und Fahrzeuggestell.

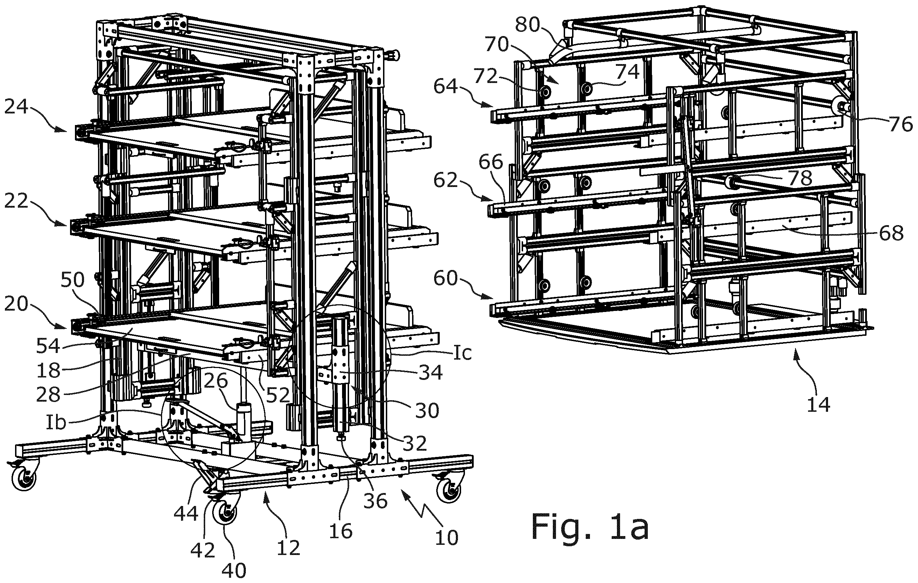

Die Fig. 1a zeigt ein Bestückungssystem 10 mit einem Bestückungswagen 12 und einem Fahrzeuggestell 14.

Der Bestückungswagen 12 umfasst ein Grundgestell 16 und ein relativ zum Grundgestell 16 in der Höhe verstellbares Warenaufnahmegestell 18. Das Warenaufnahmegestell 18 weist mehrere Ladebodenaufnahmen 20, 22, 24 auf.

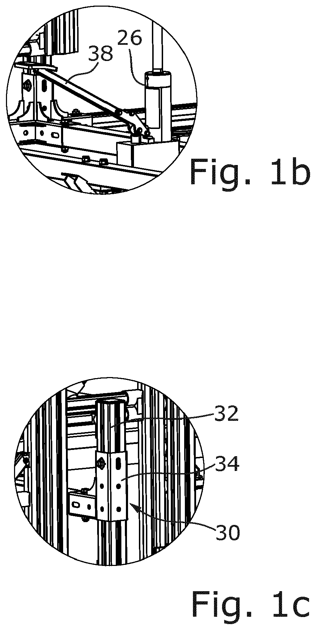

Die Höhenverstellung des Warenaufnahmegestells 18 bezüglich des Grundgestells 16 erfolgt im gezeigten Ausführungsbeispiel hydraulisch. Zu diesem Zweck ist ein Hydraulikzylinder 26 (siehe auch Fig. 1b, die das Detail Ib zeigt) zwischen dem Grundgestell 16 und dem Warenaufnahmegestell 18, insbesondere der Querstrebe 28 desselben, angeordnet.

Eine Vorpositionierung des Warenaufnahmegestells 18 zum Grundgestell 16 kann über eine Einstelleinrichtung 30 erfolgen (siehe auch Fig. 1c, die das Detail Ic zeigt). Insbesondere kann die Querstrebe 28 relativ zu der Vertikalstrebe 32 des Warenaufnahmegestells 18 über den Beschlag 34 verstellt werden. Am unteren Ende der Vertikalstrebe 32 ist ein Stopper 36 angeordnet, durch den eine Vertikalbewegung nach unten des Warenaufnahmegestells 18 begrenzt werden kann, wenn er an dem Grundgestell 16 anschlägt.

Zu erkennen ist weiterhin, dass der Hydraulikzylinder 26 über ein Betätigungselement 38 betätigbar ist. Insbesondere kann das Betätigungselement 38 mit dem Fuß betätigt werden. Durch mehrfaches Betätigen des Betätigungselements 38 kann das Warenaufnahmegestell 18 nach oben verlagert werden und so in eine Ausrichtposition bezüglich des Fahrzeuggestells 14 gebracht werden. Bei korrekter Ausrichtung kann durch Gedrückthalten des Betätigungselements 38 das Warenaufnahmegestell 18 nach unten bewegt werden (in der Regel bewegt es sich aufgrund der Schwerkraft nach unten).

Das Grundgestell 16 weist mehrere Rollen 40 auf, sodass das Grundgestell 16 und damit der Bestückungswagen 12 verfahrbar ist. Jede der Rollen 40 weist in der gezeigten Ausführungsform eine Bremse 42 auf, sodass die Rollen 40 arretiert werden können.

Zusätzlich ist jedoch eine Feststellbremse 44 vorgesehen, die durch einen Benutzer ebenfalls mit dem Fuß betätigt werden kann. Die Feststellbremse 44 wirkt mit dem Boden zusammen, auf dem der Bestückungswagen 12 angeordnet ist. Die Feststellbremse 44 ist in der Nähe des Betätigungselements 38 angeordnet, sodass sowohl das Betätigungselement 38 als auch die Feststellbremse 44 durch einen Benutzer ohne Positionswechsel mit dem Fuß betätigt werden können.

Anhand der Ladebodenaufnahme 20 ist erläutert, dass die Ladebodenaufnahmen 20, 22, 24 jeweils Ladebodenaufnahmeschienen 50, 52 aufweisen. Entlang der Ladebodenaufnahmeschienen 50, 52 können Ladeböden 54 eingeschoben werden.

Das Fahrzeuggestell 14 weist ebenfalls Ladebodenaufnahmen 60, 62, 64 auf, die ebenfalls jeweils Ladebodenaufnahmeschienen 66, 68 aufweisen. Zu erkennen ist, dass jeder Ladebodenaufnahme 60, 62, 64 eine Kippsicherung 70 zugeordnet ist. Die Kippsicherung 70 umfasst im gezeigten Darstellungsbeispiel zwei Rollen 72, 74, die auf einem Ladeboden 54, insbesondere einem Ladebodenrand, oben abrollen. Dadurch kann verhindert werden, dass der Ladeboden 54 abkippt, wenn er teilweise herausgezogen wird und im vorderen Bereich durch die Ladebodenaufnahmen 60, 62, 64 nicht mehr unterstützt wird. Im hinteren Bereich des Fahrzeuggestells 14 sind gepufferte Anschläge 76, 78 vorgesehen, die verhindern, dass beispielsweise bei einem Bremsmanöver die Ladeböden 54 samt darauf abgestellter Ware unkontrolliert in ein Fahrzeug gelangen. Insbesondere können die Ladeböden 54 an den Anschlägen 76, 78 anschlagen.

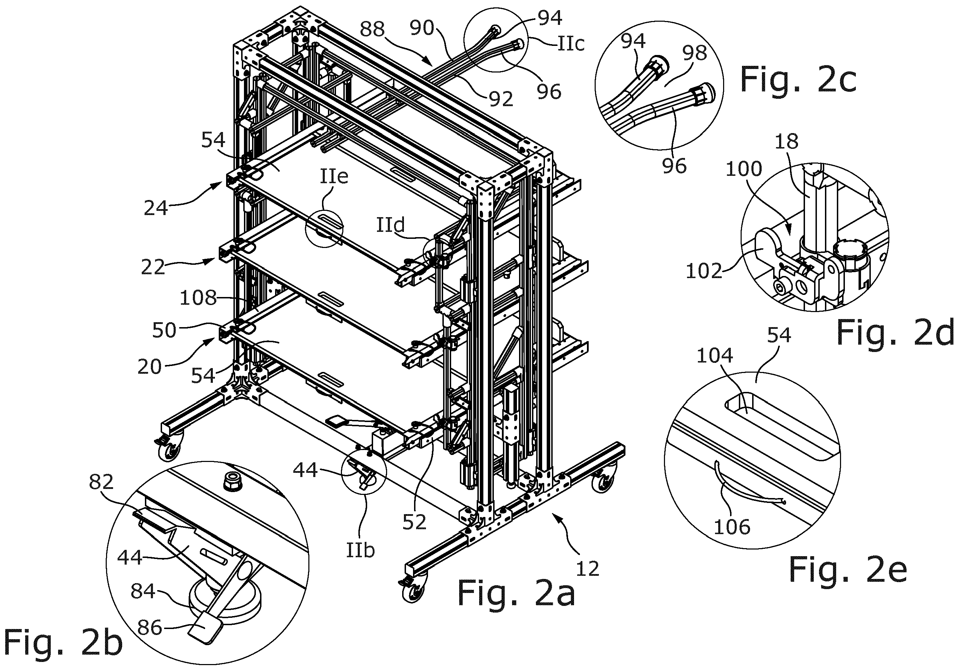

Weiterhin ist an dem Fahrzeuggestell 14 eine Ausrichthilfe 80 zu erkennen, die der Ausrichtung des Bestückungswagens 12 zum Fahrzeuggestell 16 dient. Die Fig. 2a zeigt eine weitere perspektivische Darstellung des Bestückungswagens 12. In der Fig. 2a und insbesondere auch in der Fig. 2b, die das Detail IIb zeigt, ist die bereits im Zusammenhang mit der Fig. 1a genannte Feststellbremse 44 deutlicher zu erkennen. Die Feststellbremse 44 weist ein Betätigungselement 82 auf, insbesondere ein Fußpedal, mit dem ein Bremselement 84 auf den Boden gedrückt werden kann, wodurch der Bestückungswagen 12 am Boden fixiert wird. Zum Lösen der Feststellbremse 44 ist ein weiteres Betätigungselement 86 vorgesehen, welches ebenfalls mit dem Fuß betätigbar ist.

Der Bestückungswagen 12 weist weiterhin eine Ausrichthilfe 88 auf, die im oberen Bereich des Bestückungswagens 12 angeordnet ist. Die Ausrichthilfe 88 wirkt mit der Ausrichthilfe 80 zusammen. Die Ausrichthilfe 88 weist im gezeigten Ausführungsbeispiel zwei Profile bzw. Stäbe 90, 92 auf, die voneinander beabstandet sind. Die freien Enden 94, 96 (siehe auch Fig. 2c) sind nach außen gebogen, wodurch eine Einführöffnung 98 entsteht, sodass die Ausrichthilfe 80 in die Ausrichthilfe 88 geführt wird. Die freien Enden 94, 96 stellen Einlaufschrägen dar.

Der Detaildarstellung gemäß der Fig. 2d, die das Detail IId der Fig. 2a zeigt, ist eine Ladebodenverriegelung 100 zu entnehmen. Diese weist insbesondere einen am Warenaufnahmegestell 18 schwenkbar angeordneten Hebel 102 auf, der in eine Ausnehmung am Ladeboden 54 eingreifen kann, um dadurch einen Ladeboden 54 in der Ladebodenaufnahme 24 zu verriegeln. Entsprechende Ladebodenverriegelungen können auch an den anderen Ladebodenaufnahmen 20, 22 vorgesehen sein.

Die Fig. 2e zeigt ein Detail IIe der Fig. 2a und insbesondere einen Abschnitt eines Ladebodens 54 mit einem Handgriff 104, an dem der Ladeboden 54 gezogen werden kann, und einer Handhabe 106 eines Seilzugs, der später noch näher beschrieben wird.

Der Fig. 2a kann man weiterhin entnehmen, dass die Ladebodenschiene 50 im Querschnitt im Wesentlichen C-förmig ausgestaltet ist. Dadurch übergreift der Schenkel 108 einen in der Ladebodenschiene 50 angeordneten Ladeboden 54 und stellt somit eine Ladebodenkippsicherung dar.

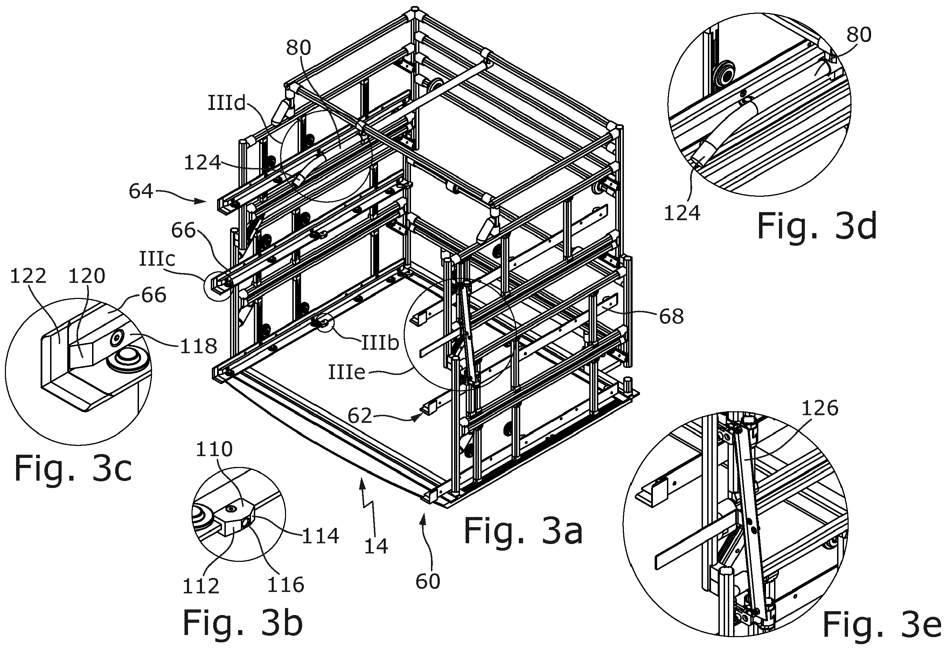

Die Fig. 3a zeigt eine weitere perspektivische Darstellung des Fahrzeuggestells 14. Anhand der vergrößerten Darstellung der Fig. 3b des Details IIIb der Fig. 3a ist zu erkennen, dass an den Ladebodenaufnahmen 60, 62, 64, insbesondere an den Ladebodenschienen 66, 68, Ladebodensicherungen 110 vorgesehen sein können. Die Ladebodensicherungen 110 weisen Schrägen 112, 114 auf, durch die ein Sicherungsstift zu einer Stiftaufnahme 116 geführt werden kann. Der noch näher zu beschreibende Stift rastet in der Stiftaufnahme 116 ein. In Längsrichtung einer Ladebodenschiene 66, 68 können mehrere, insbesondere zwei, solcher Ladebodensicherungen 110 vorgesehen sein.

In der Fig. 3c ist ein Detail IIIc der Fig. 3a gezeigt. Insbesondere ist der vordere Endbereich der Ladebodenschiene 66 gezeigt. Zum einen ist zu erkennen, dass im Bereich der Ladebodenschiene 66 eine Führung 118 vorgesehen ist, an der ein Ladeboden 54 geführt werden kann. Die Führung 118 weist eine Einlaufschräge 120 auf.

Weiterhin ist ein Aufsetzelement 122 zu erkennen, auf das eine Ladebodenschiene 50, 52 des Bestückungswagens 12 aufgesetzt werden kann, sodass ein Ladeboden 54 von bestückungswagenseitigen Ladebodenschienen 50, 52 direkt auf fahrzeuggestellseitige Ladebodenschienen 66, 68 überführt werden kann. Das Aufsetzelement 122 erleichtert eine horizontale Ausrichtung der Ladebodenschienen 50, 52, 66, 68.

Die Fig. 3d zeigt ein Detail IIId der Fig. 3a. Insbesondere ist zu erkennen, dass die Ausrichthilfe 80 ein nach unten abgewinkeltes Endstück 124 aufweist. Dadurch wird sichergestellt, dass die Ausrichthilfe 80 zuverlässig in die Ausrichthilfe 88 gelangt und das freie Ende der Ausrichthilfe 80 nicht mit dem Warenaufnahmegestell 18 kollidiert.

Die Fig. 3e zeigt ein Detail IIIe der Fig. 3a. Insbesondere ist ein Entriegelungsmechanismus 126 zu erkennen, mit dem mehrere Ladebodenverriegelungen 102 gleichzeitig entriegelt werden können. Über den Entriegelungsmechanismus 126 können mehrere Ladenbodenverriegelungen 102 miteinander gekoppelt sein.

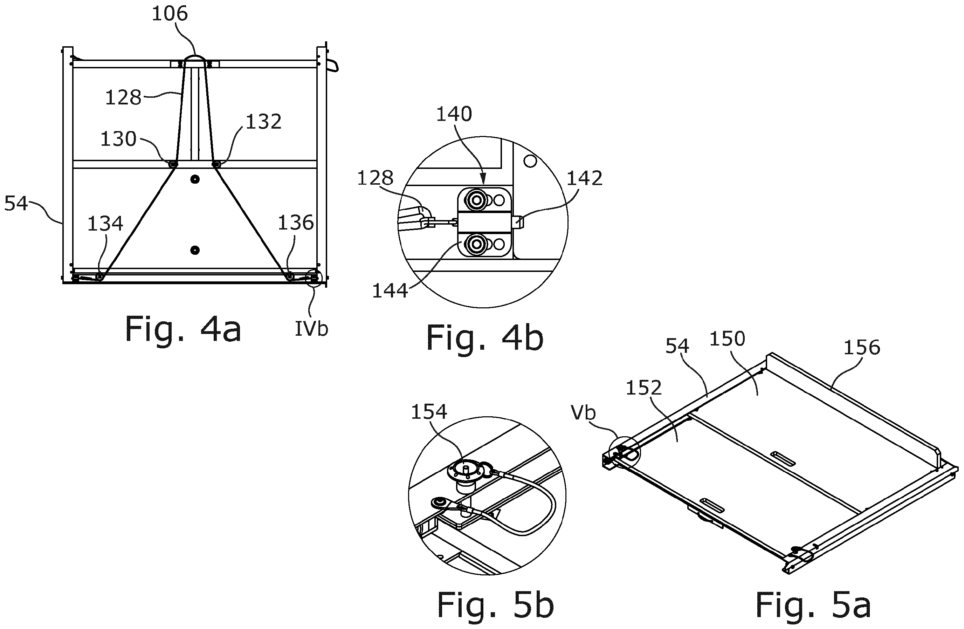

Die Fig. 4a zeigt eine Ansicht von unten auf den Ladeboden 54. Entlang des Ladebodens 54 ist ein Seilzug 128 über im gezeigten Ausführungsbeispiel vier Umlenkrollen 130 - 136 geführt. Die Handhabe 106 wurde bereits im Zusammenhang mit der Fig. 2a erwähnt. Der Seilzug 128 ist, wie sich insbesondere dem in der Fig. 4b gezeigten Detail IVb entnehmen lässt, mit einer Ladebodenarretierung 140 verbunden, insbesondere einem Bolzen oder Stift 142. Der Stift 142 ist in der Halterung 144 federbeaufschlagt gelagert und wirkt mit der Ladebodensicherung 110 zusammen, insbesondere ist er dafür vorgesehen, in die Stiftaufnahme 116 einzugreifen. Durch Zug an dem Seilzug 128, insbesondere der Handhabe 106, kann der Stift 142 gegen die Rückstellkraft der Feder zurückgezogen werden und so die Arretierung an der Ladebodensicherung 110 gelöst werden.

Die Fig. 5a zeigt eine perspektivische Ansicht des Ladebodens 54. Insbesondere ist zu erkennen, dass der Ladeboden 54 einen Ladebodenabschnitt 150 und einen Ladebodenabschnitt 152 aufweist. Wenn Waren von dem Ladebodenabschnitt 152 entladen wurden, kann der Ladebodenabschnitt 150 über den Ladebodenabschnitt 152 gezogen werden, sodass der Ladebodenabschnitt 150 zum Entladen leichter zugänglich ist. Gemäß einer Weiterbildung kann vorgesehen sein, dass der Ladebodenabschnitt 152 und der Ladebodenabschnitt 150 die Position tauschen, wenn an dem Ladebodenabschnitt 150 gezogen wird, sodass nach wie vor ein durchgängiger Ladeboden erhalten bleibt. Die Ladebodenabschnitte 150, 152 können durch einen entsprechenden Mechanismus miteinander gekoppelt sein. Ein in der Fig. 5a abgebildeter Ladeboden mit zwei relativ zueinander bewegbaren Ladebodenabschnitten kann auch als eigenständige Erfindung betrachtet werden. Ein solcher Ladeboden kann, muss aber nicht, eine Ladebodenarretierung mit zugehörigen Bauteilen aufweisen.

Der Ladebodenabschnitt 152 kann durch eine Arretierung 154, siehe auch Fig. 5b, die das Detail Vb zeigt, gesichert werden. Die Arretierung 154 muss gelöst werden, damit die Ladebodenabschnitte 150, 152 relativ zueinander bewegt werden können. An dem Ladebodenabschnitt 150 kann eine nach oben gerichtete Warensicherung 156 vorgesehen sein. Eine solche Sicherung kann auch bei Ladeböden 54 vorgesehen sein, die lediglich einen Ladebodenabschnitt aufweisen, beispielsweise ein durchgängiges Brett.

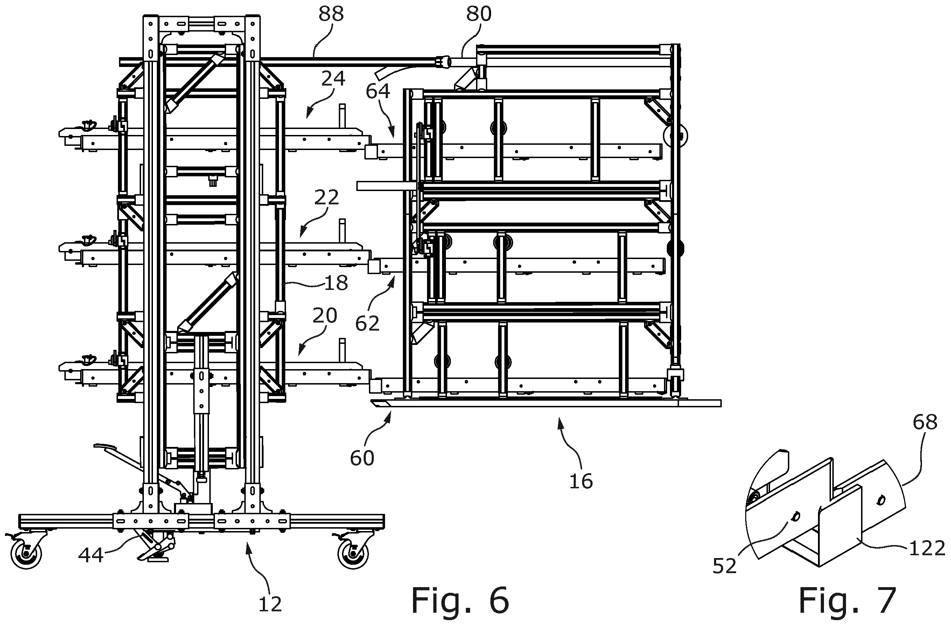

Die Fig. 6 zeigt den Bestückungswagen 12, der über die Ausrichthilfen 80, 88 zum Fahrzeuggestell 16 ausgerichtet wurde. Der Bestückungswagen 12 wurde über die Feststellbremse 44 in seiner Position arretiert. Das Warenaufnahmegestell 18 befindet sich in einer Höhenposition, sodass die Ladebodenaufnahmen 20, 22, 24 über den Ladebodenaufnahmen 60, 62, 64 angeordnet sind.

Aus der Detaildarstellung der Fig. 7 ist entnehmbar, dass die Ladebodenschienen 50, 52 über den Aufsetzelementen 122 angeordnet sind.

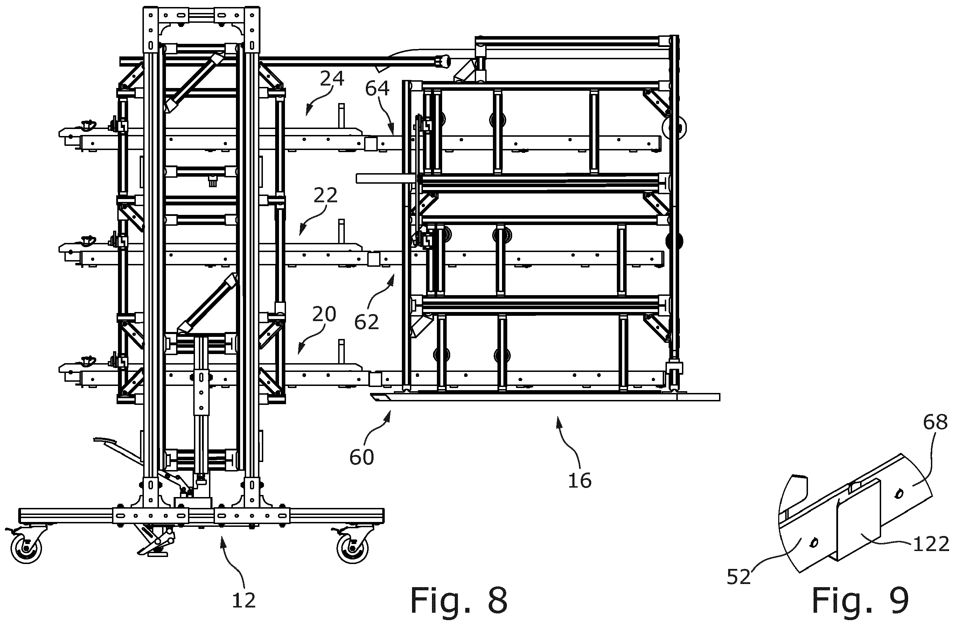

Wird nun entsprechend der Fig. 8 das Warenaufnahmegestell 18 abgesenkt, so drücken die Ladebodenaufnahmen 20, 22, 24 auf die Aufsetzelemente 122 und damit auf die Ladebodenaufnahmen 60, 62, 64. Die Ladebodenaufnahmen 20, 22, 24 und 60, 62, 64 sind jetzt zueinander ausgerichtet und befinden sich paarweise in derselben Ebene, sodass ein Ladeboden 54 von den Ladebodenaufnahmen 20, 22, 24 jeweils in die Ladebodenaufnahmen 60, 62, 64 verschoben werden kann oder umgekehrt.

Die Fig. 9 zeigt, dass die Ladebodenaufnahmen, insbesondere die Ladebodenschienen 52, 68 bündig sind und die Ladebodenschiene 52 auf das Aufsetzelement 122 drückt.

## Patentansprüche

1. Bestückungswagen (12) zum Bestücken eines Fahrzeugs mit Waren, mit einem Grundgestell (14) und einem relativ zum Grundgestell (12) in der Höhe verstellbaren Warenaufnahmegestell (16), wobei das Warenaufnahmegestell (16) mehrere Ladebodenaufnahmen (20, 22, 24) aufweist.

2. Bestückungswagen nach Anspruch 1, **dadurch gekennzeichnet, dass** das Warenaufnahmegestell (16) hydraulisch, elektrisch oder pneumatisch relativ zum Grundgestell (14) verstellbar ist.

3. Bestückungswagen nach einem der vorhergehenden Ansprüche, **dadurch gekennzeichnet, dass** der Bestückungswagen (12) fahrbar ist.

4. Bestückungswagen nach einem der vorhergehenden Ansprüche, **dadurch gekennzeichnet, dass** er eine Feststellbremse (44), insbesondere eine mit dem Boden zusammenwirkende Feststellbremse (44), aufweist.

5. Bestückungswagen nach einem der vorhergehenden Ansprüche, **dadurch gekennzeichnet, dass** eine Ausrichthilfe (88) zur Ausrichtung des Bestückungswagens (12) bezüglich eines zu beladenden Fahrzeugs vorgesehen ist.

6. Bestückungswagen nach einem der vorhergehenden Ansprüche, **dadurch gekennzeichnet, dass** zumindest eine Ladenbodenaufnahme (20, 22, 24), vorzugsweise alle Ladebodenaufnahmen (20, 22, 24), zwei Ladebodenaufnahmeschienen (50, 52) aufweisen.

7. Bestückungswagen nach einem der vorhergehenden Ansprüche, **dadurch gekennzeichnet, dass** zumindest eine Ladebodenaufnahme (20, 22, 24) eine Ladebodenverriegelung (100) aufweist.

8. Bestückungswagen nach einem der vorhergehenden Ansprüche, **dadurch gekennzeichnet, dass** zumindest eine Ladebodenaufnahme (20, 22, 24) eine Ladebodenkippsicherung aufweist.

9. Bestückungswagen nach einem der vorhergehenden Ansprüche, **dadurch gekennzeichnet, dass** zumindest eine Ladebodenaufnahme (20, 22, 24) eine Ladebodensicherung (110) aufweist.

10. Bestückungswagen nach einem der vorhergehenden Ansprüche, **dadurch gekennzeichnet, dass** ein Ladeboden (54) vorgesehen ist, der in eine Ladebodenaufnahme (20, 22, 24) einschiebbar ist, wobei der Ladeboden (54) eine mit der Ladebodensicherung (110) zusammenwirkende, insbesondere manuell betätigbare, Ladebodenarretierung (140) aufweist.

11. Bestückungswagen nach einem der vorhergehenden Ansprüche, **dadurch gekennzeichnet, dass** der Ladeboden (54) zwei relativ zueinander bewegbare Ladenbodenabschnitte (150, 152) aufweist, wobei ein Ladebodenabschnitt (152) unter den anderen Ladebodenabschnitt (150) schiebbar ist.

12. Fahrzeuggestell (14) zur Montage in einem Fahrzeug, mit mehreren Ladebodenaufnahmen (60, 62, 64) und einer Ausrichthilfe (80) zur Ausrichtung eines Bestückungswagens (12).

13. Fahrzeuggestell nach Anspruch 12, **dadurch gekennzeichnet, dass** es zumindest ein Aufsetzelement (122) aufweist, auf das ein Element des Bestückungswagens (12), insbesondere des Warenaufnahmegestells (18), aufsetzbar ist.

14. Fahrzeuggestell nach einem der vorhergehenden Ansprüche 12 oder 13, **dadurch gekennzeichnet, dass** zumindest eine Ladebodenaufnahme (60, 62, 64) eine Ladebodenverriegelung (100) aufweist.

15. Fahrzeuggestell nach einem der vorhergehenden Ansprüche 12 bis 14, **dadurch gekennzeichnet, dass** zumindest eine Ladebodenaufnahme (60, 62, 64) eine Ladebodenkippsicherung (70) aufweist.

16. Fahrzeuggestell nach einem der vorhergehenden Ansprüche 12 bis 15, **dadurch gekennzeichnet, dass** zumindest eine Ladebodenaufnahme (60, 62, 64) eine Ladebodensicherung (110) aufweist.

17. Bestückungssystem (10) mit einem Bestückungswagen (12) nach einem der Ansprüche 1 bis 11 und einem Fahrzeuggestell (14) nach einem der Ansprüche 12 bis 16.
